Europäisches Patentamt

European Patent Office

Office européen des brevets

(19)

(11)  EP 0 720 006 B1

(12)  FASCICULE DE BREVET EUROPEEN

(45) Date de publication et mention
de la délivrance du brevet:
**22.09.1999  Bulletin 1999/38**

(51) Int Cl.6: **G01L 23/10**, G01L 9/00

(21) Numéro de dépôt: **95402949.2**

(22) Date de dépôt: **27.12.1995**

(54) **Procédé et dispositif de mesure non intrusifs des fluctuations de la pression d'un fluide à l'intérieur d'une canalisation**

Verfahren und Vorrichtung zur nicht intrusiven Messung der Druckschwankungen einer Flüssigkeit innerhalb einer Kanalisation

Method and device for non intrusively measuring the pressure fluctuations of a fluid within a conduit

(84) Etats contractants désignés:
**AT BE CH DE DK ES GB GR IE IT LI LU MC NL PT SE**

(30) Priorité: **30.12.1994  FR 9415945**

(43) Date de publication de la demande:
**03.07.1996  Bulletin 1996/27**

(73) Titulaire: **PRINCIPIA RECHERCHE DEVELOPPEMENT S.A.**
**83507 La Seyne sur Mer (FR)**

(72) Inventeurs:
- **Landel, Eric**
  **F-83500 La Seyne sur Mer (FR)**
- **King, Doris**
  **97300- Cayenne (GY)**
- **De Laharpe, Vincent**
  **92370 Chaville (FR)**

(74) Mandataire: **Thévenet, Jean-Bruno et al**
**Cabinet Beau de Loménie**
**158, rue de l'Université**
**75340 Paris Cédex 07 (FR)**

(56) Documents cités:
**EP-A- 0 042 371         EP-A- 0 283 524**
**EP-A- 0 316 257         DE-A- 2 647 470**
**DE-A- 4 002 790         FR-A- 2 476 836**
**GB-A- 2 073 423         US-A- 4 192 179**
**US-A- 4 296 635**

- **PATENT ABSTRACTS OF JAPAN vol. 12 no. 288 (P-741) ,8 Août 1988 & JP-A-63 063932 (DAIKIN IND LTD) 22 Mars 1988,**
- **PATENT ABSTRACTS OF JAPAN vol. 012 no. 319 (P-751) ,30 Août 1988 & JP-A-63 085324 (FUJITSU LTD) 15 Avril 1988,**

# EP 0 720 006 B1

## Description

La présente invention a pour objet un procédé et un dispositif de mesure non intrusifs des fluctuations de la pression d'un fluide à l'intérieur d'une canalisation cylindrique, notamment de la pression acoustique d'un fluide, la canalisation présentant un rayon interne $R_i$ très supérieur à l'épaisseur $e_t$ de la canalisation.

Il est souvent nécessaire de pouvoir caractériser des écoulements de fluides dans des canalisations et notamment de mesurer des fluctuations de pression, plus particulièrement des fluctuations de pression acoustique sous forme d'ondes planes.

Les mesures de pression dans les conduites cylindriques sont généralement pratiquées en y insérant un capteur de pression dont la partie sensible est affleurante au milieu fluide. Cette technique possède l'avantage d'utiliser une technologie existante qui fournit avec une bonne précision la pression locale au point de mesure. Toutefois, une telle technique est de type intrusif, c'est-à-dire implique de réaliser un perçage de la tuyauterie pour y insérer le capteur. Ceci est un inconvénient majeur, notamment dans tous les cas où les milieux internes et externes à la tuyauterie sont dans des état très différents, en particulier de température et de pression, ou lorsque le fluide est lui-même de nature dangereuse. Il est alors en effet tout à fait impossible d'envisager de percer la paroi du tuyau sans interrompre l'exploitation du circuit et purger l'ensemble des canalisations. Une telle interruption d'exploitation a des conséquences pratiques et économiques très importantes et ne peut souvent être effectuée de façon réaliste.

C'est pourquoi la présente invention a en particulier pour objet de permettre d'effectuer des mesures de pression à l'intérieur d'une canalisation sans intrusion à l'intérieur du circuit et donc sans qu'il soit nécessaire d'effectuer des perçages, de prendre des mesures de sécurité ou d'interrompre ou gêner l'exploitation du circuit.

On connaît également, par exemple du document US-A-4 296 635, des capteurs qui se montent directement sur l'extérieur de la canalisation d'injection et qui comportent des éléments de mesure sont plaqués directement sur la paroi extérieure de la canalisation.

L'invention a encore pour but de permettre la mesure de fluctuations de pression d'un fluide gazeux, liquide ou multiphasique à l'intérieur d'une canalisation d'une façon simple, pratique à mettre en oeuvre et bon marché tout en garantissant d'excellents résultats en termes de précision, sensibilité et fiabilité des mesures effectuées.

Ces buts sont atteints grâce à un procédé de mesure de fluctuations de la pression d'un fluide à l'intérieur d'une canalisation cylindrique, la canalisation présentant un rayon interne $R_i$ très supérieur à l'épaisseur $e_t$ de la canalisation, caractérisé en ce qu'il comprend les étapes suivantes :

a) disposer autour de la canalisation cylindrique une bague cylindrique d'épaisseur uniforme $e_s$ comportant au moins une fente selon l'une de ses génératrices et présentant une longueur L comprise entre environ $\frac{D}{10}$ et D, et de préférence entre $\frac{D}{5}$ et $\frac{D}{4}$, où D est le diamètre extérieur de la canalisation, et un rayon interne Rj correspondant au rayon externe R de la canalisation, l'épaisseur $e_s$ et la nature du matériau de la bague étant choisies de telle manière que la bague présente une raideur au moins égale à celle de la canalisation,

b) rattacher aux deux bords de la fente de la bague au moins un capteur d'effort ou de déplacement à grande étendue de mesure sensible aux déformations ou aux contraintes supportées par la bague et présentant lui-même une raideur sensiblement équivalente à celle de la canalisation,

c) procéder à un serrage modéré de la bague cylindrique autour de la canalisation de manière à assurer un contact permanent entre les deux structures, la tension de serrage étant détectée par le capteur,

d) procéder électriquement à une remise à zéro du capteur correspondant à une compensation des contraintes statiques liées aux efforts de serrage de la bague sur la canalisation et à la pression statique à l'intérieur de la canalisation,

e) mesurer les variations d'effort ou de longueur détectées par le capteur, et

f) déterminer les fluctuations de la pression du fluide à l'intérieur de la canalisation de manière non intrusive à partir des mesures de variations d'effort ou de longueur détectées par le capteur.

Avantageusement, on utilise un capteur de type piézoélectrique comprenant des cellules de force à quartz, adapté pour mesurer des forces dynamiques et quasi statiques de quelques mN à environ 2 500 N.

Selon un premier mode de réalisation particulièrement simple, performant et fiable, on met en oeuvre une bague cylindrique présentant en fonctionnement une fente unique coopérant avec un capteur.

Selon un autre mode de réalisation possible, on met en oeuvre une bague cylindrique présentant en fonctionnement plusieurs fentes réalisées selon des génératrices de la bague cylindrique et réparties à la périphérie de ladite bague et on dispose entre les bords des différentes fentes différents capteurs d'effort ou de déplacement à grande étendue de mesure sensibles aux déformations ou aux contraintes supportées par la bague et présentant eux-mêmes des raideurs sensiblement équivalentes à celle de la canalisation.

Le procédé selon l'invention donne en particulier d'excellents résultats lorsqu'il est appliqué à une canalisation dont le rayon interne $R_i$ est supérieur à au moins dix fois l'épaisseur $e_t$ de la canalisation.

2

L'invention concerne encore un dispositif de mesure de fluctuations de la pression d'un fluide à l'intérieur d'une canalisation cylindrique, la canalisation présentant un rayon interne $R_i$ très supérieur à l'épaisseur $e_t$ de la canalisation, caractérisé en ce qu'il comprend :

a) une bague cylindrique d'épaisseur uniforme $e_s$ comportant au moins une fente selon l'une de ses génératrices et présentant une longueur L comprise entre environ $\frac{D}{10}$ et D, et de préférence entre $\frac{D}{5}$ et $\frac{D}{4}$, où D est le diamètre extérieur de la canalisation et un rayon interne Rj correspondant au rayon externe R de la canalisation, l'épaisseur $e_s$ et la nature du matériau de la bague étant choisies de telle manière que la bague présente une raideur au moins égale à celle de la canalisation,

b) au moins un capteur d'effort ou de déplacement à grande étendue de mesure sensible aux déformations ou aux contraintes supportées par la bague et présentant lui-même une raideur sensiblement équivalente à celle de la canalisation, lequel capteur est relié par ses extrémités opposées aux deux bords de ladite fente,

c) des moyens de serrage de la bague cylindrique autour de la canalisation, et

d) des moyens de mesure et de traitement associés au capteur pour éliminer électriquement les informations du capteur correspondant à des contraintes statiques, conserver avec une grande sensibilité les seules mesures correspondant à des variations d'effort ou de longueur détectées par le capteur et déterminer les fluctuations de la pression du fluide à l'intérieur de la canalisation à partir des mesures de variations d'effort ou de longueur détectées par le capteur.

Selon un mode de réalisation préférentiel, la bague cylindrique fendue est réalisées en au moins deux parties et les moyens de serrage comprennent au moins une paire de brides et des moyens de liaison coopérant avec chaque paire de brides.

Selon un autre aspect avantageux de l'invention, la bague cylindrique fendue comprend au moins deux pattes orientées vers l'extérieur du côté opposé à la canalisation, situées au voisinage de la fente et s'étendant sensiblement parallèlement à la fente de part et d'autre de celle-ci, le capteur de mesure étant fixé entre ces pattes.

Selon un mode particulier de réalisation du dispositif selon l'invention, la bague cylindrique comprend une première partie semi-cylindrique formant berceau, rattachée par des brides à des deuxième et troisième parties constituant approximativement des quarts de cylindre et présentant chacune au voisinage de leurs extrémités d'une part une bride de liaison à une bride de la première partie, et d'autre part, du côté délimitant la fente, une patte de support d'une extrémité du capteur.

D'autres caractéristiques et avantages de l'invention ressortiront de la description suivante de modes particuliers de réalisation, donnés à titre d'exemples non limitatifs, en référence aux dessins annexés, sur lesquels :

- la figure 1 est une vue en perpective d'un tronçon de canalisation équipé d'un dispositif de mesure de pression de fluide selon l'invention, et
- la figure 2 est une vue en coupe selon la ligne II-II de la figure 1.

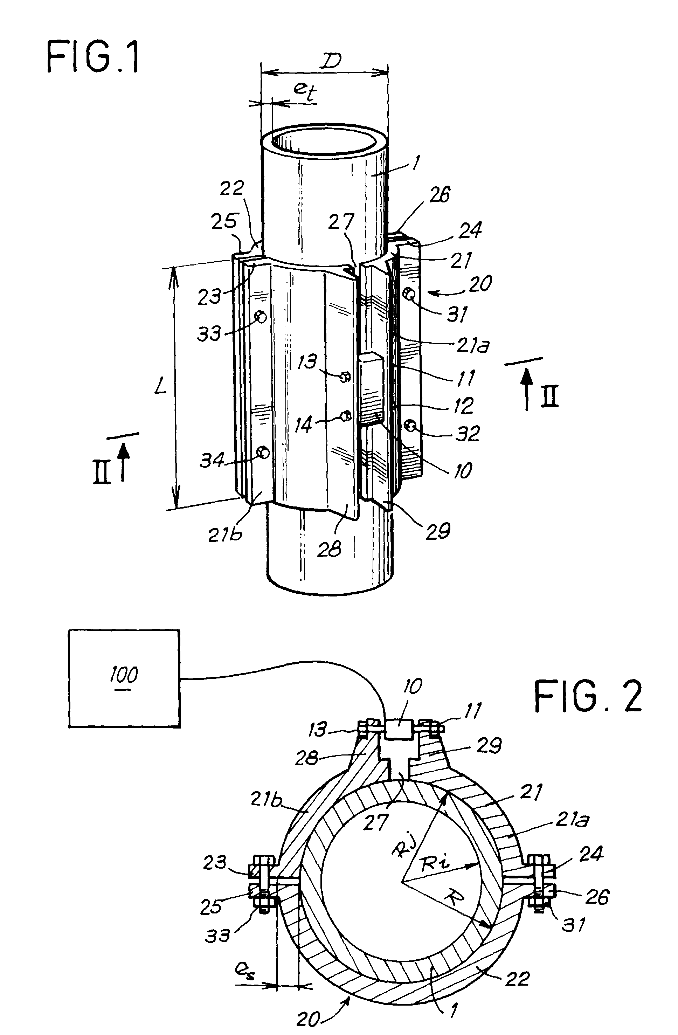

On a représenté sur la figure 1 une canalisation cylindrique 1 dans laquelle circule un fluide gazeux. Cette canalisation peut être considérée à titre d'exemple comme horizontale, mais peut naturellement présenter toutes sortes d'orientations, l'invention permettant d'adapter un dispositif de mesure quelle que soit l'orientation de cette canalisation.

La canalisation 1 peut être constituée de divers matériaux, mais sera considérée à titre d'exemple comme étant en acier. L'épaisseur $e_t$ de la canalisation 1 à laquelle peut s'appliquer l'invention doit être très inférieure au rayon interne $R_i$ de la canalisation. En pratique, le rayon interne $R_i$ doit de préférence être supérieur à environ dix fois l'épaisseur $e_t$ pour permettre des mesures de pression de bonne précision avec le procédé selon l'invention.

Comme on peut le voir sur les figures 1 et 2, pour effectuer de façon non intrusive des mesures de fluctuations de pression à l'intérieur de la canalisation 1, selon l'invention, on dispose de façon localisée autour de la canalisation tubulaire 1 un support d'épreuve de forme cylindrique constitué par une bague 20 qui épouse la forme de la canalisation cylindrique 1 et comporte au moins une fente 27 s'étendant selon une génératrice de la bague 20. Par ailleurs, au moins un capteur d'effort ou de déplacement 10 est relié aux deux extrémités de la bague fendue 20 délimitant la fente 27 pour détecter les variations de contraintes de la bague 20 autour de la canalisation 1.

La bague 20 présente une épaisseur uniforme $e_s$ et se trouve réalisée en un matériau tel que la bague 20 présente une raideur au moins égale à celle de la canalisation 1. La bague 20 peut ainsi être réalisée en acier par exemple. Le rayon interne Rj de la bague 20 correspond au rayon externe R de la canalisation 1. Par ailleurs, la surface de la bague 20 doit être suffisante pour que celle-ci ne s'incruste pas dans la canalisation 1. En pratique, la longueur L de la bague 20 peut être comprise entre environ $\frac{D}{10}$ et D, et de préférence comprise entre $\frac{D}{5}$ et $\frac{D}{4}$, où D représente le diamètre extérieur de la canalisation 1.

La bague 20 peut être serrée autour de la canalisation 1, par exemple à l'aide d'un système à brides.

Ainsi, on a représenté à titre d'exemple sur les figures 1 et 2 une bague cylindrique 20 comprenant une première partie 22 semi-cylindrique formant berceau qui est engagée sous la canalisation 1 et se trouve rattachée par des brides 25, 26 à des deuxième et troisième parties de bague 21a, 21b qui présentent approximativement la forme de quarts de cylindre. Chaque partie 21a, 21b comporte, à une de ses extrémités, une bride 24, 23 permettant un assemblage avec les brides 25, 26 de la partie 22 à l'aide de boulons ou autres moyens de liaison 31 à 34. Par ailleurs, les parties 21a, 21b ménagent un espace libre constituant une fente 27 entre leurs extrémités libres non équipées des brides 23, 24. Des pattes 29, 28 de support des extrémités du capteur 10 sont solidaires des extrémités des pièces 21a, 21b définissant la fente 27. Les pattes 28, 29 orientées vers l'extérieur du côté opposé à la canalisation 1 s'étendent sensiblement parallèlement à la fente 27 de part et d'autre de celle-ci.

La bague 20 est réalisée en au moins deux parties. Selon une variante de réalisation, la bague 20 pourrait comporter deux parties constituant deux coques semi-cylindriques pour chacune desquelles une extrémité libre définirait en fonctionnement la fente 27 des figures 1 et 2 et pourrait comporter une patte de fixation du capteur 10 d'une façon tout à fait identique à la réalisation des figures 1 et 2, mais l'autre extrémité libre comporterait une bride destinée à assembler les deux coques et exercer une force de serrage contre la canalisation 1. Dans une telle variante de réalisation, il existe donc une seule paire de brides qui peut être identique aux paires de brides 23, 25 et 24, 26 assemblées par les boulons 31 à 34, mais qui se trouve située de façon diamétralement opposée au capteur 10. Une telle variante de réalisation est très simple, mais le mode de réalisation des figures 1 et 2 présente l'avantage de mieux répartir les efforts de serrage autour de la canalisation 1 et d'être bien adapté en particulier au cas des tuyauteries horizontales. Sur la figure 1 pour des raisons de clarté, l'échelle n'a pas été respectée entre le diamètre D de la canalisation 1 (qui peut présenter dans certains cas des valeurs supérieures à 1 mètre) et la longueur L de la bague 20 qui est inférieure ou égale à la valeur du diamètre extérieur D. Par ailleurs, pour des canalisations 1 de faible section, chaque paire de brides 23, 25 respectivement 24, 26 et le capteur 10 peuvent être fixés par un seul élément de liaison 33 ou 34 respectivement 31 ou 32 et 13 ou 14.

Le capteur de mesure 10 est constitué par un capteur d'effort ou de déplacement à grande étendue de mesure qui est sensible aux déformations ou aux contraintes supportées par la bague 20 et présente lui-même une raideur sensiblement équivalente à celle de la canalisation 1.

Dans la mesure où la pression de serrage initiale des moyens d'assemblage 23, 25 ; 24, 26; 31 à 34 des différentes parties de la bague 20 est suffisante pour assurer un bon contact avec la surface externe de la canalisation 1 et éviter un décollement, le capteur 10 peut mesurer les déplacements ou les efforts subis par la paroi de la canalisation 1, qui sont transmis au capteur 10 par l'intermédiaire de la bague 20. Les déplacements ou efforts subis par la paroi de la canalisation 1 reflètent eux-mêmes l'action du fluide à l'intérieur de la canalisation 1 et donc les fluctuations de la pression du fluide.

Avec le dispositif selon l'invention, la variation de longueur ou d'effort subie par la bague fendue 20 est reliée aux variations de section de la conduite 1 provoquées par des fluctuations de la pression acoustique, de sorte que la pression acoustique est directement reliée à la variation de longueur ou d'effort subie par la bague 20.

Dans la pratique, si on considère une canalisation 1 en acier de quelques millimètres d'épaisseur et une pression fluctuante P du fluide de l'ordre de plusieurs dizaines de millibars, les déformations maximales obtenues au niveau du capteur sont extrêmement faibles. Ceci justifie l'emploi de capteurs d'efforts associés à une bague 20 la plus raide possible de telle sorte que la canalisation 1 lui transmette un effort maximum (en pratique, la bague 20 peut être réalisée de manière à présenter en terme d'épaisseur et de module d'Young des caractéristiques identiques à celles de la canalisation 1).

Le capteur 10 doit présenter lui-même une raideur importante pour pouvoir effectuer des mesures dynamiques d'efforts faibles. On choisit ainsi selon l'invention un capteur, avantageusement de type piézoélectrique, qui présente une grande raideur, de l'ordre de celle de la canalisation 1, et qui présente corrélativement une grande étendue de mesure.

Le capteur 10 utilisé dans le cadre de la présente invention est choisi de manière à pouvoir subir des efforts pouvant être importants lors du serrage de la bague 20 sur la canalisation 1, tout en étant capable en même temps de mesurer de petites variations d'effort avec une précision suffisante.

Un tel capteur 10 peut ainsi être constitué par un capteur de type piézoélectrique comprenant des cellules de force à quartz, adapté pour mesurer des forces dynamiques et quasi statiques de quelques mN à environ 2 500 N.

A titre d'exemple, un capteur tel que celui commercialisé par la Société KISTLER et présentant les caractéristiques générales suivantes peut permettre d'effectuer des mesures suffisamment précises :

| Gamme | N | 0...2500 |
|---|---|---|
| Surcharge | N | 3000 |
| Seuil de réponse | mN | 10 |
| Sensibilité | pC/N | -44 |
| Linéarité | %FSO | ≤±1 |

(suite)

| Rigidité N/n | N/m | ≈ 400 E$^6$ |
|---|---|---|
| Fréquence propre | kHz | ≈ 200 |
| Poids | g | 1,2 |
| Hauteur | mm | 6 |
| Diamètre | mm | 6 |

Selon un aspect important de la présente invention, lors de la mise en place de la bague 20 et du capteur 10, il est nécessaire de procéder à un serrage modéré, mais suffisamment important, à l'aide des moyens de liaison pour que tous les mouvements et efforts subis par les parois de la canalisation 1 soient transmis à la bague 20 et par là même au capteur 10. Lors de cette étape, la chaîne d'acquisition des mesures 100 est alors réglée sur la gamme maximale d'utilisation du capteur. A ce stade, on ne peut cependant mesurer que les efforts dûs au serrage de la bague 20 et à la pression statique. Les efforts dûs aux variations de pression sont comparativement trop faibles.

C'est pourquoi, dans une étape suivante, une fois terminée la mise en place de la bague ou support d'épreuve 20 et du ou des capteurs 10 et ces éléments ayant été soumis au serrage requis contre la canalisation 1, on procède électriquement à une remise à zéro du capteur 10 à l'aide de la chaîne d'acquisition de mesure 100. Lors de cette opération de remise à zéro électrique, les efforts dus au serrage, à la pression statique et aux variations de pression deviennent la nouvelle référence nulle à l'instant de la remise à zéro. Comme par définition le serrage et la pression statique sont constants, le capteur 10 ne mesurera que les variations d'effort dues aux variations de pression. Pour avoir une bonne précision, il suffira alors de choisir la gamme de mesure la plus sensible.

Le capteur 10 fournit ainsi une mesure de la contrainte F dans le support d'épreuve 20, qui est reliée à la pression acoustique $P_a$ par une relation du type:

$$(1) \qquad F.T = P_a$$

où T représente la fonction de transfert à déterminer pour connaître la pression $P_a$ dans la conduite à partir de la force F. Il apparaît que la valeur de T peut se mettre sous la forme :

$$(2) \qquad T = \frac{\rho a}{F}$$

Il s'agit alors de déterminer la formulation de T et comparer ses valeurs par rapport à l'expression (2).

La quantité T peut être obtenue par une calibration sur banc d'essais, ou par une simulation par des méthodes numériques (éléments finis) ou encore par une formulation théorique.

Il est possible d'écrire d'une façon théorique que

$$T = \frac{-i\omega\,\rho c b}{\beta\,E_c\,S_c} \qquad\qquad (3)$$

où

$\rho =$      masse volumique de fluide interne
$c =$      célérité des ondes acoustiques dans le fluide interne
$b =$      rayon moyen de la canalisation
$E_c =$      module d'Young du capteur
$S_c =$      section du capteur
$\beta =$      admittance reliant la pression acoustique interne et la déformée de la paroi de la canalisation, dont l'évolution en fonction de la fréquence est quasiment linéaire.

L'admittance $\beta$ peut elle-même s'exprimer de la façon suivante pour le tube 1:

$$\beta = \frac{b}{h}\frac{\rho c^2}{\rho_p c_p^2}\frac{1}{1 - k^2 b^2\dfrac{c^2}{c_p^2} + \dfrac{1}{12}b^2 h^2 k_z^4 + \nu^2\dfrac{k_g^2 c_p^2}{k^2 c^2 - k_g^2 c_p^2}} \qquad (4)$$

où

| | |
|---|---|
| E : | Module d'Young du matériau de la paroi |
| ν : | Coefficient de Poisson du matériau de la paroi |
| $c_p = (\dfrac{E}{\rho_p (1 - \nu^2)})1/2$ : | Célérité des ondes quasi longitudinales dans le tube |
| $\rho_p$ : | Masse volumique du matériau de la paroi |
| h : | Epaisseur du tube |
| c : | Célérité des ondes acoustiques dans le fluide interne |
| ρ : | Masse volumique du fluide interne |
| $k_z$ : | Nombre d'onde acoustique |
| b : | Rayon du tube |

De la sorte, une fois connus les divers paramètres relatifs au tube 1 et au fluide interne, la chaîne d'acquisition de mesure 100 peut à tout moment déterminer les fluctuations de la pression du fluide à l'intérieur de la canalisation 1 de manière non intrusive à partir des mesures de variation d'effort ou de longueur détectées par le capteur 10.

La détermination des fluctuations de pression dans la canalisation 1 peut être réalisée avec d'autant plus de fiabilité que les fréquences f des ondes acoustiques dans le fluide interne sont basses.

En particulier, le procédé et le dispositif selon l'invention sont d'autant plus fiables que l'on a

$$f < \frac{1}{2\pi}\cdot\frac{c_p}{b} \qquad (5)$$

où $c_p$ et b ont la signification indiquée plus haut.

L'invention peut naturellement comprendre divers modes de réalisation.

Ainsi, il est possible de mettre en oeuvre une bague cylindrique 20 présentant en fonctionnement plusieurs fentes 27 réalisées selon des génératrices de la bague cylindrique 20 et réparties à la périphérie de la bague. Dans ce cas, on dispose entre les bords des différentes fentes 27 différents capteurs d'effort ou de déplacement 10 à grande étendue de mesure sensibles aux déformations de la bague 20 et présentant eux-mêmes des raideurs sensiblement équivalentes à celle de la canalisation 1. Dans ce cas, on procède pour chaque capteur à une remise à zéro électrique après la fin des opérations de serrage des divers éléments de la bague 20, comme cela a été exposé plus haut en référence à un capteur unique.

D'une manière générale, la présente invention est applicable à toutes les canalisations minces et rigides, dont la raideur n'est pas excessive, et qui peuvent agir comme un élément vibrant couplé avec la pression du fluide interne. Toutefois, il est important que le ou les capteurs n'agissent pas directement sur cette canalisation, mais sur un support intermédiaire (bague 20) présentant un contact intime bien réparti sur une surface suffisante de la canalisation, avec un serrage contre la canalisation mais sans excès.

On notera que l'invention est applicable à des canalisations de natures diverses, même non métalliques, par exemple à des canalisations en caoutchouc ou polyéthylène.

Dans le cas où la canalisation est très raide, par exemple dans le cas de l'acier, le système selon l'invention permet de mesurer les variations de contraintes ou d'efforts qui s'exercent sur la paroi de la conduite, du fait des variations de pression interne, par l'intermédiaire de la bague à laquelle sont transmis ces efforts ou contraintes.

Au contraire, pour des matériaux plus souples, on peut mesurer les variations d'allongement de la bague 20, qui sont liées aux variations de section de la canalisation entraînées par les fluctuations de la pression du fluide à l'intérieur de la canalisation.

Dans certains cas où les tolérances de cylindricité des canalisations ne seraient pas correctes, un traitement local de la surface externe de la canalisation est possible pour mieux adapter l'état de surface. Toutefois, en général, l'invention donne de bons résultats avec des canalisations de transport de gaz de qualité courante.

# EP 0 720 006 B1

## Revendications

1. Procédé de mesure de fluctuations de la pression d'un fluide à l'intérieur d'une canalisation cylindrique (1), la canalisation présentant un rayon interne $R_i$ très supérieur à l'épaisseur $e_t$ de la canalisation (1), caractérisé en ce qu'il comprend les étapes suivantes :

   a) disposer autour de la canalisation cylindrique (1) une bague cylindrique (20) d'épaisseur uniforme $e_s$ comportant au moins une fente (27) selon l'une de ses génératrices et présentant une longueur L comprise entre environ $\frac{D}{10}$ et D, et de préférence entre $\frac{D}{5}$ et $\frac{D}{4}$, où D est le diamètre extérieur de la canalisation (1), et un rayon interne Rj correspondant au rayon externe R de la canalisation (1), l'épaisseur $e_s$ et la nature du matériau de la bague (20) étant choisies de telle manière que la bague (20) présente une raideur au moins égale à celle de la canalisation,
   b) rattacher aux deux bords de la fente (27) de la bague (20) au moins un capteur d'effort ou de déplacement (10) à grande étendue de mesure sensible aux déformations ou aux contraintes supportées par la bague (20) et présentant lui-même une raideur sensiblement équivalente à celle de la canalisation (1),
   c) procéder à un serrage modéré de la bague cylindrique (20) autour de la canalisation (1) de manière à assurer un contact permanent entre les deux structures, la tension de serrage étant détectée par le capteur (10),
   d) procéder électriquement à une remise à zéro du capteur (10) correspondant à une compensation des contraintes statiques liées aux efforts de serrage de la bague (20) sur la canalisation (1) et à la pression statique à l'intérieur de la canalisation (1),
   e) mesurer les variations d'effort ou de longueur détectées par le capteur (10), et
   f) déterminer les fluctuations de la pression du fluide à l'intérieur de la canalisation (1) de manière non intrusive à partir des mesures de variations d'effort ou de longueur détectées par le capteur (10).

2. Procédé selon la revendication 1, caractérisé en ce que l'on utilise un capteur (10) de type piézoélectrique comprenant des cellules de force à quartz, adapté pour mesurer des forces dynamiques et quasi statiques de quelques mN à environ 2 500 N.

3. Procédé selon la revendication 1 ou 2, caractérisé en ce que l'on met en oeuvre une bague cylindrique (20) présentant en fonctionnement une fente (27) unique coopérant avec un capteur (10).

4. Procédé selon la revendication 1 ou 2, caractérisé en ce que l'on met en oeuvre une bague cylindrique (20) présentant en fonctionnement plusieurs fentes (27) réalisées selon des génératrices de la bague cylindrique (20) et réparties à la périphérie de ladite bague (20) et en ce que l'on dispose entre les bords des différentes fentes (27) différents capteurs d'effort ou de déplacement (10) à grande étendue de mesure sensibles aux déformations ou aux contraintes supportées par la bague (20) et présentant eux-mêmes des raideurs sensiblement équivalentes à celle de la canalisation (1).

5. Procédé selon l'une quelconque des revendications 1 à 4, caractérisé en ce qu'il est appliqué à une canalisation (1) dont le rayon interne $R_i$ est supérieur à au moins dix fois l'épaisseur $e_t$ de la canalisation (1).

6. Dispositif de mesure de fluctuations de la pression d'un fluide à l'intérieur d'une canalisation cylindrique (1), la canalisation (1) présentant un rayon interne $R_i$ très supérieur à l'épaisseur $e_t$ de la canalisation (1), comprenant :

   a) une bague cylindrique (20) d'épaisseur uniforme $e_s$ comportant au moins une fente (27) selon l'une de ses génératrices et présentant une longueur L comprise entre environ $\frac{D}{10}$ et D et de préférence entre $\frac{D}{5}$ et $\frac{D}{4}$, où D est le diamètre extérieur de la canalisation (1) et un rayon interne Rj correspondant au rayon externe R de la canalisation (1), l'épaisseur $e_s$ et la nature du matériau de la bague (20) étant choisies de telle manière que la bague (20) présente une raideur au moins égale à celle de la canalisation (1),
   b) au moins un capteur d'effort ou de déplacement (10) à grande étendue de mesure sensible aux déformations ou aux contraintes supportées par la bague (20) et présentant lui-même une raideur sensiblement équivalente à celle de la canalisation (1), le capteur (10) étant relié par ses extrémités opposées (11, 12 ; 13, 14) aux deux bords de ladite fente (27),
   c) des moyens (23 à 26, 31 à 34) de serrage de la bague cylindrique autour de la canalisation (1), et
   d) des moyens (100) de mesure et de traitement associés au capteur (10) pour éliminer électriquement les informations du capteur (10) correspondant à des contraintes statiques, conserver avec une grande sensibilité les seules mesures correspondant à des variations d'effort ou de longueur détectées par le capteur (10) et déterminer les fluctuations de la pression du fluide à l'intérieur de la canalisation (1) à partir des mesures de variations d'effort ou de longueur détectées par le capteur (10).

**7.** Dispositif selon la revendication 6, caractérisé en ce que la bague cylindrique fendue (20) est réalisée en au moins deux parties et en ce que lesdits moyens de serrage comprennent au moins une paire de brides (23, 25 ; 24, 26) et des moyens (33, 34 ; 31, 32) de liaison coopérant avec chaque paire de brides.

**8.** Dispositif selon la revendications 6 ou 7, caractérisé en ce que la bague cylindrique fendue (20) comprend au moins deux pattes (28, 29) orientées vers l'extérieur du côté opposé à la canalisation (1), situées au voisinage de la fente (27), et s'étendant sensiblement parallèlement à la fente (27) de part et d'autre de celle-ci, et en ce que le capteur (10) est fixé entre lesdites pattes (28, 29).

**9.** Dispositif selon l'une quelconque des revendications 6 à 8, caractérisé en ce que la bague cylindrique (20) comprend une première partie (22) semi-cylindrique formant berceau, rattachée par des brides (25, 26) à des deuxième et troisième parties (21a, 21b) constituant approximativement des quarts de cylindre et présentant chacune au voisinage de leurs extrémités d'une part une bride (24 respectivement 23) de liaison à une bride (26 respectivement 25) de la première partie (22) et d'autre part, du côté délimitant la fente (27), une patte (29 respectivement 28) de support d'une extrémité du capteur (10).

**Patentansprüche**

**1.** Verfahren zum Messen von Druckschwankungen eines Strömungsmittels im Inneren einer zylindrischen Rohrleitung (1), wobei die Rohrleitung einen Innenradius $R_i$ aufweist, der sehr viel größer ist als die Dicke $e_t$ der Rohrleitung (1), dadurch gekennzeichnet, daß es die folgenden Schritte aufweist:

a) Anordnen eines Zylinderrings (20) rund um die zylindrische Rohrleitung (1), mit einer gleichförmigen Dicke $e_s$, der mindestens einen Schlitz (27) längs einer seiner Erzeugenden aufweist, und eine Länge L aufweist, die zwischen etwa D/10 und D liegt, und bevorzugt zwischen D/5 und D/4, wobei D der Außendurchmesser der Rohrleitung (1) ist, und einen inneren Radius Rj, der dem Außenradius R der Rohrleitung (1) entspricht, wobei die Dicke $e_s$ und die Art des Materials des Rings (20) derart ausgewählt sind, daß der Ring (20) eine Steifigkeit darbietet, die mindestens gleich ist der der Rohrleitung,

b) Ansetzen mindestens eines Kraft- oder Weg-Meßfühlers (10) mit großem Meßbereich an die beiden Ränder des Schlitzes (27) des Rings (20), wobei der Meßfühler auf Verformungen oder auf Spannungen anspricht, die vom Ring (20) abgestützt werden, und seinerseits eine Steifigkeit aufweist, die im wesentlichen äquivalent zu der der Rohrleitung (1) ist,

c) Fortfahren mit einer mäßigen Klemmung des zylindrischen Rings (20) rund um die Rohrleitung (1) derart, daß eine ständige Berührung zwischen diesen beiden Bauteilen sichergestellt ist, wobei die Klemmspannung vom Meßfühler (10) erfaßt wird,

d) Elektrisches Herbeiführen einer Rückstellung des Meßfühlers (10) auf null, die einer Kompensierung der statischen Spannungen entspricht, die mit den Klemmkräften des Rings (20) auf der Rohrleitung (1) und dem statischen Druck im Inneren der Rohrleitung (1) verbunden ist,

e) Messen der Kraft- oder Längenänderungen, die vom Meßfühler (10) aufgenommen werden, und

f) Bestimmen der Schwankungen des Strömungsmitteldrucks im Inneren der Rohrleitung (1) von außen her bzw. nichteindringend aufgrund von Messungen der Kraft- oder Längenänderungen, die vom Meßfühler (10) erfaßt wurden.

**2.** Verfahren nach Anspruch 1, dadurch gekennzeichnet, das man einen piezoelektrischen Meßfühler (10) benutzt, der Quarz-Kraftzellen aufweist und dazu eingerichtet ist, um dynamische und quasi-statische Kräfte von einigen mN bis zu etwa 2500 N zu messen.

**3.** Verfahren nach Anspruch 1 oder 2, dadurch gekennzeichnet, daß man einen zylindrischen Ring (20) einsetzt, der im Betrieb einen einzigen Schlitz (27) aufweist, der mit einem Meßfühler (10) zusammenwirkt.

4. Verfahren nach Anspruch 1 oder 2, dadurch gekennzeichnet, daß man einen zylindrischen Ring (20) einsetzt, der im Betrieb mehrere Schlitze (27) aufweist, die längs Erzeugender des zylindrischen Rings (20) ausgeführt sind und über den Umfang des genannten Rings (20) verteilt sind, und daß man zwischen den Rändern der unterschiedlichen Schlitze (27) verschiedene Meß- oder Weg-Meßfühler (10) mit großem Meßbereich anordnet, die auf Verformungen oder auf Spannungen ansprechen, die vom Ring (20) aufgenommen werden, und die ihrerseits Steifigkeiten aufweisen, die im wesentlichen äquivalent zu denen der Rohrleitung (1) sind.

5. Verfahren nach irgendeinem der Ansprüche 1 bis 4, dadurch gekennzeichnet, daß es bei einer Rohrleitung (1) angewandt wird, deren innerer Radius $R_i$ mindestens größer ist als das Sechsfache der Dicke $e_t$ der Rohrleitung (1).

6. Vorrichtung zur Messung von Druckschwankungen eines Strömungsmittels im Inneren einer zylindrischen Rohrleitung (1), wobei die Rohrleitung (1) einen inneren Radius $R_i$ aufweist, der viel größer ist als die Dicke $e_t$ der Rohrleitung (1), mit:

   a) einem zylindrischen Ring (20) mit gleichförmiger Dicke $e_s$, der mindestens einen Schlitz (27) längs einer seiner Erzeugenden aufweist und eine Länge L darbietet, die zwischen etwa D/10 und D, und bevorzugt zwischen D/5 und D/4 liegt, wobei D der Außendurchmesser der Rohrleitung (1) ist und der Innenradius Rj dem Außenradius R der Rohrleitung (1) entspricht, und wobei die Dicke $e_s$ und die Art des Materials des Rings (20) derart ausgewählt sind, daß der Ring (20) eine Steifigkeit aufweist, die mindestens gleich ist der der Rohrleitung (1),

   b) mindestens einem Kraft- oder Weg-Meßfühler (10) mit großem Meßbereich, der auf Verformungen oder auf Spannungen anspricht, die vom Ring (20) aufgenommen werden, und der seinerseits eine Steifigkeit aufweist, die im wesentlichen äquivalent ist zu der der Rohrleitung (1), wobei der Meßfühler (10) an seinen entgegengesetzten Enden (11,12;13,14) mit den beiden Rändern des genannten Schlitzes (27) verbunden ist,

   c) Mitteln (23 bis 26, 31 bis 34) zum Festklemmen des Zylinderrings rund um die Rohrleitung (1), und

   d) Mitteln (100) zur Messung und zur Verarbeitung, die dem Meßfühler (10) zugeordnet sind, um elektrisch die Informationen des Meßfühlers (10) aufzuheben, die statischen Spannungen entsprechen, um mit großer Empfindlichkeit die einzigen Messungen beizubehalten, die den Änderungen von Kraft oder Länge entsprechen, die durch den Meßfühler (10) erfaßt wurden, und um die Schwankungen des Drucks des Strömungsmittels im Inneren der Rohrleitung (1) aufgrund von Messungen der Kraft oder der Länge zu bestimmen, die vom Meßfühler (10) erfaßt werden.

7. Vorrichtung nach Anspruch 6, dadurch gekennzeichnet, daß der zylindrische, geschlitzte Ring (20) aus mindestens zwei Teilen gebildet ist, und daß die genannten Klemmittel mindestens ein Paar von Flanschen (23,25; 24,26) und Verbindungsmittel (33,34; 31,32) aufweisen, die mit jedem Paar von Flanschen zusammenwirken.

8. Vorrichtung nach Anspruch 6 oder 7, dadurch gekennzeichnet, daß der zylindrische, geschlitzte Ring (20) mindestens zwei Laschen (28, 29) aufweist, die auf der Seite, die der Rohrleitung (1) entgegengesetzt ist, nach außen gerichtet sind, in der Nähe des Schlitzes (27) gelegen sind und sich im wesentlichen parallel zum Schlitz (27) beiderseits dessen erstrecken, und daß der Meßfühler (10) zwischen den genannten Laschen (28, 29) befestigt ist.

9. Vorrichtung nach irgendeinem der Ansprüche 6 bis 8, dadurch gekennzeichnet, daß der zylindrische Ring (20) einen ersten, halbzylindrischen Teil (22) aufweist, der eine Wiege bildet, die durch Flansche (25, 26) an einen zweiten und dritten Teil (21a, 21b) angesetzt ist, die etwa Zylinderviertel bilden und jeweils in der Nähe ihrer Enden einerseits einen Flansch (24 bzw. 23) zur Verbindung mit einem Flansch (26 bzw. 25) des ersten Teils (22) und andererseits auf der Seite, die den Schlitz (27) begrenzt, eine Lasche (29 bzw. 28) zum Tragen eines Endes des Meßfühlers (10) aufweisen.

## Claims

1. Method of measuring fluctuations in the pressure of a fluid inside a cylindrical pipe (1), the pipe having an internal radius $R_i$ very much greater than the thickness $e_t$ of the pipe (1), characterized in that it comprises the following steps:

a) placing around the cylindrical pipe (1) a cylindrical ring (20) of uniform thickness $e_s$ having at least one slit (27) along one of its generatrices and a length L of between about $\frac{D}{10}$ and D, and preferably between $\frac{D}{5}$ and $\frac{D}{4}$, where D is the outside diameter of the pipe (1), and an internal radius Rj corresponding to the external radius R of the pipe (1), the thickness $e_s$ and the nature of the material of the ring (20) being chosen to be such that the ring (20) has a stiffness at least equal to that of the pipe,

b) attaching to the two edges of the slit (27) of the ring (20) at least one load or displacement sensor (10) with a wide measurement range, sensitive to the deformations or stresses experienced by the ring (20) and itself having a stiffness substantially equivalent to that of the pipe (1),

c) moderately clamping the cylindrical ring (20) around the pipe (1) so as to ensure permanent contact between the two structures, the clamping tension being detected by the sensor (10),

d) electrically re-zeroing the sensor (10), this step corresponding to compensating for the static stresses associated with the loads involved in clamping the ring (20) on the pipe (1) and with the static pressure inside the pipe (1),

e) measuring the variations in load or length detected by the sensor (10), and

f) determining the fluctuations in the pressure of the fluid inside the pipe (1) non-intrusively from the measured variations in load or length detected by the sensor (10).

2. Method according to Claim 1, characterized in that use is made of a sensor (10) of the piezoelectric type, comprising quartz force cells designed to measure dynamic and quasi-static forces from a few mN to about 2500 N.

3. Method according to Claim 1 or 2, characterized in that use is made of a cylindrical ring (20) which in operation has a single slit (27) collaborating with a sensor (10).

4. Method according to Claim 1 or 2, characterized in that use is made of a cylindrical ring (20) which in operation has several slits (27) made along generatrices of the cylindrical ring (20) and distributed at the periphery of the said ring (20), and in that between the edges of the various slits (27) there are placed various load or displacement sensors (10) with a broad measurement range, sensitive to the deformations or stresses experienced by the ring (20) and themselves having stiffnesses substantially equivalent to that of the pipe (1).

5. Method according to any one of Claims 1 to 4, characterized in that it is applied to a pipe (1), the internal radius $R_i$ of which is greater than at least ten times the thickness $e_t$ of the pipe (1).

6. Device for measuring fluctuations in the pressure of a fluid inside a cylindrical pipe (1), the pipe (1) having an internal radius $R_i$ very much greater than the thickness $e_t$ of the pipe (1), comprising:

a) a cylindrical ring (20) of uniform thickness $e_s$ having at least one slit (27) along one of its generatrices and a length L of between about $\frac{D}{10}$ and D, and preferably between $\frac{D}{5}$ and $\frac{D}{4}$, where D is the outside diameter of the pipe (1), and an internal radius Rj corresponding to the external radius R of the pipe (1), the thickness $e_s$ and the nature of the material of the ring (20) being chosen to be such that the ring (20) has a stiffness at least equal to that of the pipe (1),

b) at least one load or displacement sensor (10) with a wide measurement range, sensitive to the deformations or stresses experienced by the ring (20) and itself having a stiffness substantially equivalent to that of the pipe (1), the sensor (10) being connected by its opposite ends (11, 12; 13, 14) to the two edges of the said slit (27),

c) means (23 to 26, 31 to 34) for clamping the cylindrical ring around the pipe (1), and

d) measurement and processing means (100) associated with the sensor (10) for electrically eliminating information from the sensor (10) that corresponds to static stresses, retaining, with great sensitivity, only those measurements which correspond to variations in load or length detected by the sensor (10) and determining the fluctuations in the pressure of the fluid inside the pipe (1) from measured variations in load or length detected by the sensor (10).

7. Device according to Claim 6, characterized in that the split cylindrical ring (20) is made in at least two parts and in that the said clamping means comprise at least one pair of flanges (23, 25; 24, 26) and connecting means (33, 34; 31, 32) collaborating with each pair of flanges.

8. Device according to Claim 6 or 7, characterized in that the split cylindrical ring (20) comprises at least two lugs (28, 29) pointing outwards away from the pipe (1), these lugs being located near the slit (27) and running substantially parallel to the slit (27), one on each side thereof, and in that the sensor (10) is secured between the said lugs (28, 29).

9. Device according to any one of Claims 6 to 8, characterized in that the cylindrical ring (20) comprises a first, semicylindrical, part (22), forming cradle, attached by flanges (25, 26) to second and third parts (21a, 21b) approximately forming quarters of a cylinder and each having, near their ends, on the one hand, a flange (24 (or 23)) for connecting to a flange (26 (or 25)) of the first part (22) and, on the other hand, on the side delimiting the slit (27), a lug (29 (or 28)) for supporting one end of the sensor (10).

# FIG.1

# FIG. 2